Europäisches Patentamt

(19) European Patent Office

Office européen des brevets

(11) Publication number: **0 197 852**
**A2**

(21) Application number: **86400681.2**

(22) Date of filing: **28.03.86**

(51) Int. Cl.⁴: **F 02 B 75/32**
**F 02 B 75/04**

---

(30) Priority: **01.04.85 CN 85100321**

(43) Date of publication of application:
**15.10.86 Bulletin 86/42**

(84) Designated Contracting States:
**DE FR GB**

(71) Applicant: **DALIAN OCEAN SHIPPING INSTITUTE**
**Ling Shui Qiao**
**Dalian(CN)**

(72) Inventor: **Yuqing, Qian**
**Lingshuiqiao**
**Dalian(CN)**

(74) Representative: **Descourtieux, Philippe et al,**
**CABINET BEAU de LOMENIE 55 rue d'Amsterdam**
**F-75008 Paris(FR)**

---

(54) **Diesel engine with oil-cushioned piston.**

(57) The hydraulic elastic element (3, 6, 7) between the piston (22) and the small-end of connecting rod (10) of the diesel engine acts as a spring owing to the compressibility of oil, and by the action of this element the cylinder volume of the engine can be automatically controlled according to the change of pressure of gas in the cylinder. This property enables the engine to take a higher compression ratio on the condition that the maximum pressure of gas in the cylinder remains within its predetermined limit, and to raise the compression ratio automatically when the load of the engine drops, with the result that the efficiency of the engine will be increased and the performance of the engine under low load will be improved. The rigidity of the above-mentioned hydraulic elastic element can be easily adjusted with the engine in operation for further improvement of the performances of the engine under various loads.

./...

EP 0 197 852 A2

FIG.1

## DIESEL ENGINE WITH OIL-CUSHIONED PISTON

The present invention relates to a piston type internal combustion engine, wherein an elastic element is installed between the piston and the small end of the connecting rod so as to make the distance at top dead center between the piston and the cylinder head variable. The elastic element used in this engine is a kind of liquid spring operating upon the compressibility of oil.

Various types of internal combustion engines with hydraulic transmission between the piston and the output shaft have heretofore been proposed. For example, U.S. Pat.No.4,319,546 disclosed a "hydraulic combustion engine", wherein the hydraulic transmission between the driving piston (i.e. the first piston on the side of the combustion chamber) and the driven piston (i.e. the second piston on the side of the power output mechanism) is adopted. Although there is some resemblance between those hydraulic transmissions adopted in various internal combustion engines and the hydraulic elastic element in the present invention, none of those hydraulic transmissions is designed as a liquid spring operating upon the compressibility of oil. Furthermore, those engines are always built with an invariable top dead center of the piston by all means, hence the distance at top dead center between the piston and the cylinder head in those engines is invariable. The hydraulic transmission from the piston to the output shaft in those engines therefore has no substantial effect upon the thermodynamic process in the cylinder, and it cannot be used for improving the thermodynamic process in the cylinder with the aim of improving the performance of the engine.

The prior art closer to the present invention is the U.S.Pat. No.3,964,452 of Nakamura et.al. of Japan. The "high compression internal combustion engine using a lean charge" disclosed in this patent is a kind of spark ignition gasoline engine, wherein a metallic helical spring is installed between the piston and the small end of a connecting rod. The spring begins to be compressed when the pressure of gas in the combustion process reaches a predetermined value, thus causing the piston to move, enlarging the cylinder volume and lowering the pressure of gas in the cylinder. The function of this spring is to set a limit of the maximum pressure in the cylinder and to enable the engine to take a higher compression ratio with the maximum pressure of gas in the cylinder not exceeding a predetermined value.

According to the description of the above-mentioned patent, when a lean mixture is used in this internal combustion engine with a higher compression ratio, the noxious components of the exhaust gas will be reduced without the risk of lowering the thermal efficiency. But the purpose of increasing the compression ratio of this internal combustion engine is solely to compensate the drop in thermal efficiency due to the restricted relatively low value of maximum pressure in the cylinder. Moreover, the spring installed between the piston and the connecting rod will be out of action during the compression stroke or in low load operation of the engine. Therefore, in the engine equipped with this kind of spring, the compression ratio will remain constant at any time, the ratio of pressure rise in combustion process will also remain constant under low load, and there is no possibility to improve the thermal effiency and other performances by means of controlling these parameters. Besides, the load bearable by the metallic spring is strictly dependent upon the dimensions of the spring itself, and a fatigue failure will occur after a long time service of the spring under high frequency variable load.

According to the actual indicator diagram of this engine attached to the description of this patent, it is evident that the maximum pressure of gas in the cylinder of such an engine under high and medium load is approximately 25 $kg/cm^2$.
In such a condition, only a low load will be applied to the spring, and it might not be necessary to make a spring of large size. However, the maximum pressure of gas in the cylinder of diesel engines is 60-140 kg/cm2. If a metallic spring would

3

0197852

be used in such a case, the size of the spring has to be taken so large that the spring becomes unsuitable to be installed in the engine.

The main object of the present invention is to provide a diesel engine which is allowed to take a higher compression ratio under full load and can automatically increase the compression ratio (as referring to exhaust gas turbo-charged diesel engine) and the ratio of pressure rise in combustion process under lower load so as to increase the thermal efficiency of the engine prominently.

The second object of the present invention is to provide a diesel engine which keeps a good stability in low load operation and a good starting performance when the exhaust gas turbo-chargingwith a higher charging pressure has been used.

The third object of the present invention is to provide a diesel engine hich is able to use various fuels of low ignitability without any supplementary device or any special measure.

The fourth object of the present invention is to provide an elastic element which is suitable to install between the piston and the small end of a connecting rod and able to function in a wide range of the engine load and the cylinder pressure.

In accordance with the objects stated above, the present invention discloses a diesel engine in which a hydraulic elastic element (liquid spring) is installed between the piston and the small end of the connecting rod, i.e. the diesel engine with oil-cushioned piston. It may be of four-stroke or two-stroke type, it may be designed as a new one or modified from an existing engine.

The cylinder head, the cylinder, the connecting rod, the crankshaft, the engine body, the fuel injection system, the air inlet and gas exhaust system and other auxiliary systems in this engine are similar to those of the conventional diesel engines. In the case that an elastic element is installed between the piston and the small end of the connecting rod, it is not necessary to use a guide device at the piston (i.e. piston skirt), but a guide device at the small end of the connecting rod (piston type or cross-head type) is needed. In order to facilitate the installation of the elastic element, the cylinder block and the crank case are made separately. The length and the design of the cylinder block have to meet the requirements of installing the elastic element. Besides, in the diesel engine with oil-cushioned piston there are a device for varying the rigidity of the hydraulic elastic element with the engine in operation and a system for refilling the oil of a certain pressure into the hydraulic elastic element with the engine in operation to compensate the oil leakage.

The hydraulic elastic element comprises a hydraulic cylinder fixed in the cylinder block and two plungers which are put into the hydraulic cylinder from its two opposite ends. One of the plungers (driving plunger) is connected with the piston and the other (driven plunger) is connected with the small end of the connecting rod. These two plungers seal tightly the bore of the hydraulic cylinder while sliding in it. The tightly sealed space formed by the two plungers and the hydraulic cylinder wall is filled up with the hydraulic oil. While the diesel engine is in operation, the force is transmitted through the oil between the two plungers. At the same time, the oil is compressed and produces an elastic deformation (volumetric deformation) under the exerted force. The deformation of oil results in the variation of the distance between the two plungers as well as the distance between the top surface of the piston and the bottom surface of the cylinder head, thus causing a variation of the cylinder volume. When the pressure in the cylinder increases, the pressure exerted through the piston and driving plunger on the oil also increases, so as to bring the two plungers nearer due to the volumetric contraction of the oil, consequently, the cylinder volume increases. On the other hand, when the pressure in the cylinder decreases, the cylinder volume will decrease also. So it is clear that the hydraulic elastic element mentioned above is able to control automatically the cylinder volume as the pressure in the cylinder varies. In the diesel engine of the present time, the maximum gas pressure in the cylinder grows higher and higher as the supercharging pressure increases incessantly. It is under compulsion that the compression ratio must be reduced in order to keep the maximum pressure in the cylinder within the tolerable limit. Nevertheless, it will lead to a degradation of the engine thermal efficiecy. While the above-mentioned hydraulic elastic element is present in this case, the cylinder volume will increase automatically as the pressure in the cylinder increases, and the increase of the cylinder volume will in turn cause the pressure in the cylinder to decrease. With the aid if this function of the elastic element, in the diesel engine with oil-cushioned piston the maximum pressure in the cylinder can be kept within a specified limit without the need of lowering the compression ratio while the charging pressure is increased. Otherwise, a higher compression ratio can be taken with the maximum pressure in the cylinder being kept within a specified limit while the charging pressure remains the same. Consequently, the diesel engine with oil-cushioned piston has a higher thermal efficiency than the similar conventional diesel engines. The higher the supercharging pressure is, the more apparently this engine will be superior to the conventional engines.

When a diesel engine is in operation under a lower load, the pressure in the cylinder will decrease in compression stroke due to a lower charging pressure (as referring to exhaust gas turbo-charging diesel engine). In the case of a diesel engine with an oil-cushioned piston, at this time the force exerted upon the hydraulic elastic element as well as the compressive deformation of the elastic element under this force will decrease correspondingly. Hence, the hydraulic elastic element will lift automatically the relative position of the piston according to the extent of the pressure decrease in the cylinder, thus causing a relative decrease of the cylinder volume and a relative increase of the compression ratio. Therefore, the diesel engine with oil- cushionedpiston presents a higher thermal efficiency in low load operation than the similar conventional diesel engines.

In the case of the conventional exhaust gas turbo-charging diesel engines with a lower compression ratio, it may show an unstable operation under low load and a bad starting performance, because the charge air pressure in low load and starting period is much lower than that at full load. While the diesel engine with oil-cushioned piston is able to raise automatically the compression ratio with a lower pressure in the cylinder so as to make the pressure and temperature at the end of compression stroke so high that a reliable ignition and a normal combustion of the fuel injected into the cylinder can be ensured. Consequently, the engine can stably operate under low load and is easy to start as well.

In the case of conventional diesel engines, in order to enable the engine to use the fuels of bad ignitability, it is necessary to adopt some auxiliary devices such as the device for supplying the ignition inducing fuel, the electric spark ignitor, etc., or some other measures such as to add the agent for increasing cetane number in the fuels, to raise the inlet air temperature, etc. Since the diesel engine with oil-cushioned piston has a higher compression ratio under full load and a further higher compression ratio under lower load, it is possible to use fuels of bad ignitability in this engine without any auxiliary device or any special measure.

For the conventional diesel engine, especially an exhaust gas turbo-charging diesel engine with higher charging pressure, there is a need to decrease the compression ratio and the ratio of pressure rise in combustion process in order to restrict the maximum pressure in the cylinder under full load condition, and also a need to increase the compression ratio and the ratio of pressure rise in combustion process in order to enhance the thermal efficiency and improve the stability in operation. These two incompatible problems cannot both be solved in a conventional diesel engine. But for a diesel engine with an oil-

cushionedpiston, these problems are able to be solved to an extent as stated above, by the automatic controlling effect of the hydraulic elastic element upon the cylinder volume. While the hydraulic elastic element is supplemented with a rigidity varying device, these problems will be solved to a further extent. When the diesel engine is running at full load, the rigidity of the hydraulic elastic element can be reduced by means of this device, so that the elastic element will be contracted at a greater rate when the acting force increases. Consequently, the cylinder volume will have a greater change (increase) when the pressure in the cylinder rises, therefore the compression ratio and the ratio of pressure rise in combustion process will be reduced and the maximum pressure in the cylinder will be lowered. Conversely, when the diesel engine is running at a low load, the rigidity of the hydraulic elastic element can be increased by means of this device. By the same token, the compression ratio and the ratio of pressure rise in combustion process will be increased, so that the aim of improving the thermal efficiency and the stability in operation will be achieved. When setting the diesel engine to start, the compression ratio can be increased also in order to improve the starting performance of the engine with the aid of increasing the rigidity of the hydraulic elastic element by this device. Besides, owing to the variable rigidity of the hydraulic elastic element with this device, it is advantageous to enable the diesel engines to use various fuels of different ignitability. Obviously, the thermal efficiency and other performances as mentioned above will reach a still higher level once the rigidity varying device gets installed.

Compared with the metallic spring installed between the piston and the small end of the connecting rod as described in Nakamura's patent, the hydraulic elastic element included in the present invention has the advantage that, it has not only a wide range of operation and a numerous function of control but also a greater loading capacity and a higher service reliability (wherein the elastic material is oil, so there is no risk of fatigue

0197852

failure as it inheres in metallic materials). Therefore, the elastic element of this type is suitable to use in diesel engines.

Details of the present invention are described with reference to the accompanying drawings and embodiments as follows:

Fig.1 is a cross sectional view of the diesel engine with an oil-cushioned piston;

Fig.2 is a constructional drawing of the hydraulic elastic element;

Fig.3 shows the hydraulic system as the accessory of the hydraulic elastic element;

Fig.4 shows an ideal cycle (ideal thermal process) of the diesel engine with oil-cushioned piston.

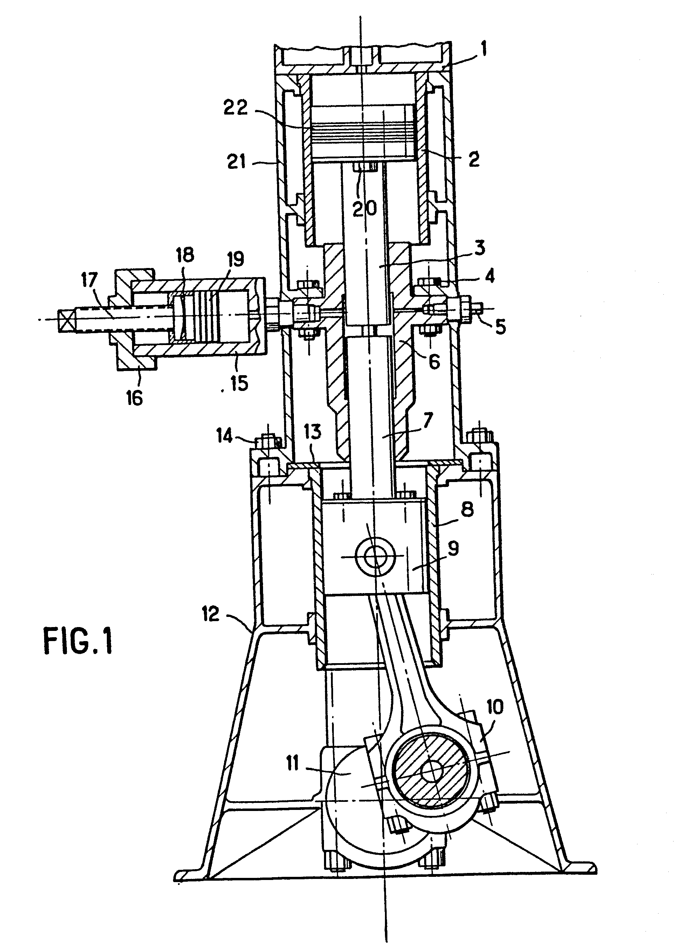

As shown in Fig.1, the essential components of the diesel engine with oil-cushioned piston include: an engine body (12), a power cylinder which comprises cylinder block (21), cylinder liner (2) and cylinder cover (1), a piston (22) which moves reciprocally in the cylinder, means for transmission cylinder power and piston motion which comprises guide piston (or guide plates) (9), connecting rod (10) and crank shaft (11), an hydraulic elastic element which comprises hydraulic cylinder (6), driving plunger (3) and driven plunger (7). The said cylinder block (21) is connected with engine body (12) with four bolts (14). A guide cylinder liner (8) is installed in the engine body (12) with a holding-down plate (13) to prevent it from axial motion.

Besides, in this diesel engine are provided the following auxiliary systems: fuel injection system, air inlet and gas exhaust system, lubricating system and cooling system. For two stroke diesel engine, the inlet and exhaust system includes the scavenging pump; for supercharged diesel engine, the inlet and exhaust system includes the supercharger.

Driving plunger (3) of the hydraulic elastic element is connected with piston (22), and driven plunger (7) is connected with connecting rod (10) through guide piston (9). These two plungers are fitted into hydraulic cylinder (6) end to end.

Said hydraulic cylinder is fixed in cylinder block (21) with four bolts (4) and kept in coaxial alignment with cylinder liner (2). The tightly sealed space formed by the inner surface of the hydraulic cylinder and the end surface of the two plungers is filled up with oil as working medium. The diameter of the two plungers in the hydraulic elastic element is smaller that that of the piston in the cylinder, so the pressure intensity of the oil in the hydraulic elastic element is greater than that of the gas in the cylinder. The ratio between the diameters of the plungers and the piston is determined according to such factors as the structure of cylinder and piston, the strength of plungers and the required pressure intensity of the oil. To enhance the pressure intensity of oil by choosing a smaller diameter of plungers wherever possible will enable the hydraulic elastic element to produce enough elastic deformation (i.e. the variation of the distance between the two plungers) even if the volume of working oil is smaller.

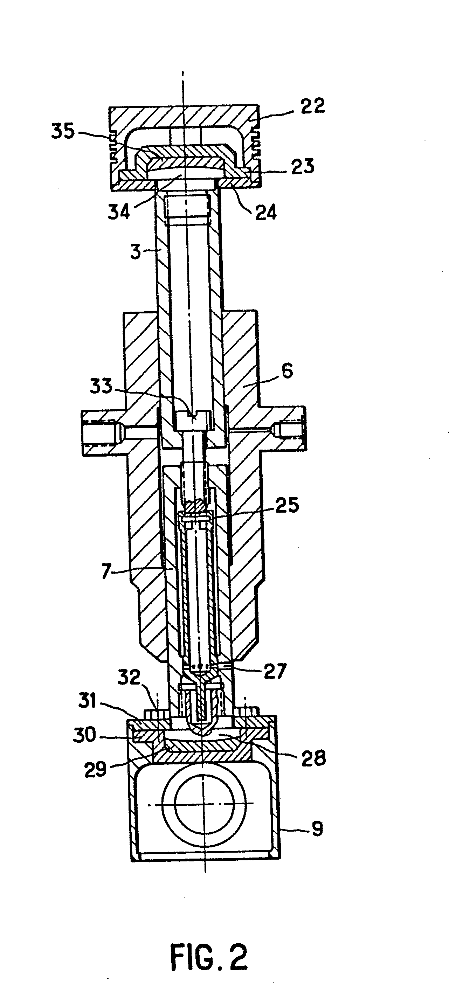

The construction of the hydraulic elastic element is shown in detail in Fig.2. The driving plunger (3) and driven plunger (7) in the hydraulic cylinder (6) are made hollow, each with one end blocked up by an end cover (34) and end cover (28) respectively. Space between the plungers and hydraulic cylinder wall is tightened by clearance (or by piston rings, where the diameter of the plungers is larger). The clearance between the plungers and the hydraulic cylinder is rather to be chosen of a smaller value, on condition that the plungers are able to slide freely in the hydraulic cylinder, in order that a good sealing effect will be obtained.

The driving plunger (3) is connected with piston (22) by a self-adjustable joint which comprises a spherical washer (35), a seating bowl (23), a cover plate (24), two (or more than two) screws (20) and the end cover (34) of the driving plunger. Said end cover (34), which has a top plate with a spherical surface, and the spherical washer (35) are provided with appropriate radial and axial clearance in their casing space formed by covering the seating bowl (23) upon the cover plate (24).

Such self-adjustable joint between the driving plunger and the piston permits the plunger to keep its axis automatically in alignment with the axis of the hydraulic cylinder so as to reduce the possible deviation between the axes of this pair of coupled parts. Similar joint is applied to the connection between driven plunger (7) and guide piston (9), where end cover (28), spherical washer (29), seating bowl (30), cover plate (31) and four (or more than four) screws (32) are used. The top plate of the end cover (28) and the spherical washer (29) are also provided with appropriate radial and axial clearance in their casing space.

The position limiting bolt (33) between the two plungers has a cylindrical head and a threaded stem. A slot for the screw driver is cut across the bolt head. A short column is prolonged from the end of the bolt stem for connecting with the locking device, at the end of which three mutually intersecting slots are cut. The head of the position limiting bolt (33) is positioned inside the bore of the driving plunger (3) and the stem of this bolt runs through a hole on the blind end of this plunger and finally thread-fastened to the end plate of the driven plunger (7). The bolt can limit the maximum distance between the two plungers, and can limit therefore the top position that the piston is possible to attain at its top dead center as well as the minimum distance between the piston at top dead center and the cylinder cover. Besides, the minimum distance between the piston and the cylinder head at top dead center can also be adjusted by means of this bolt.

The position limiting bolt has a locking device which comprises locking spindle (26), cross pin (25), and locking screw (27). At the upper end of the hollow locking spindle, where the wall is thickened, two holes are drilled diametrically, and the cross pin is riveted through these holes on the locking spindle. At the other end of the locking spindle, where the wall is also thickened, eight locking holes are drilled around the circumference and equally spaced. This locking device is linked at its upper part with the position limiting bolt by means of putting the cross pin (25) riveted on the locking spindle into one of the slots at the bolt end and linked at its lower part with driven plunger (7) by means of driving a locking screw (27) through the plunger into one of the locking holes in the locking spindle (26), so that any relative rotational movement between the driven plunger and the position limiting bolt can be prevented.

The three intersecting slots at the top end of the position limiting bolt are located 60° apart from each other, the eight locking holes in the thickened wall at the lower end of the locking spindle are located 45° apart from each other. The arrangement of these slots and holes enable the position limiting bolt to rotate by 15° or a multiple of 15° at a time while adjusting the minimum distance between the piston at top dead center and the cylinder cover, and thus the adjustable amount in the said distance will corresponding to one 24th or the multiple of 24th of the thread pitch of the bolt.

On the circumference of the flange of the hydraulic cylinder (6) is installed a compensating oil connection (5) (see Fig.1). The oil supplied by the oil refilling system will flow under certain pressure into the oil space of the hydraulic elastic element through the connection (5) and the oil passage in the hydraulic cylinder (6), so as to compensate the oil leaked out from it.

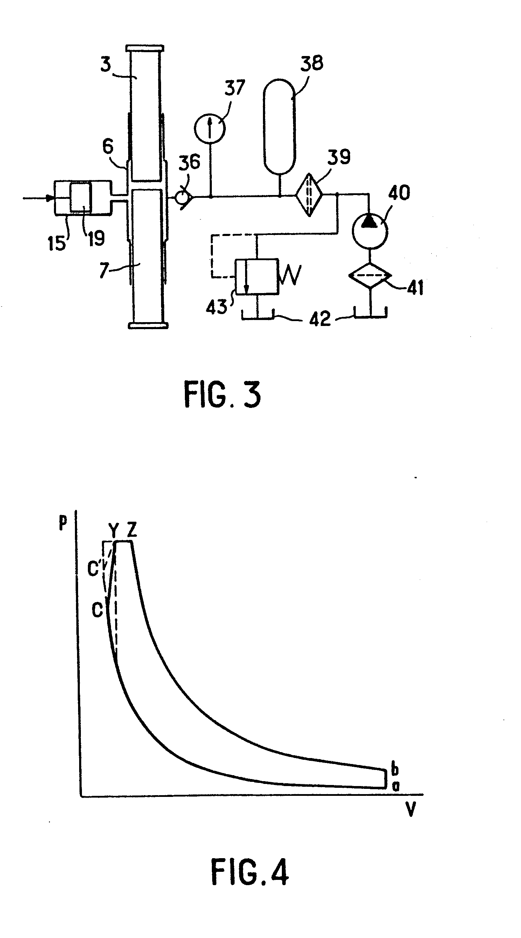

The hydraulic system attached to the hydraulic elastic element is shown in Fig. 3, which includes the oil refilling system and the device for varying the rigidity of the hydraulic elastic element. The part numbers (6), (3) and (7) represent the hydraulic cylinder, the driving plunger and the driven plunger of the elastic element respectively.

The oil refilling system of the hydraulic elastic element includes the principle components such as oil pump (40), overflow valve (43), accumulator (38), check valve (36) and the auxiliary components such as oil tank (42), coarse filter (41), fine filter (39) and pressure gauge (37).

Whenever a little amount of the working oil has leaked out from the inner space of the hydraulic elastic element in every working cycle, the oil refilling system will refill the same amount of oil into the inner space of the elastic element before the beginning of every next cycle through the check valve (36) of every elastic element, so that the inner space of the hydraulic elastic element is filled up with the oil under a certain pressure. The refilling oil pressure must be higher than the minimum oil pressure of every working cycle in the inner space of the elastic element and can be controlled and set up by the overflow valve (43) according to the requirement. In addition to those functions as stated above, this oil refilling system can maintain the minimum oil pressure of every working cycle in the hydraulic elastic element not lower than a specified limit.

The device for varying the rigidity of the hydraulic elastic element is formed by an additional receiver of compressed oil with variable volume (see Fig.1) which comprises: oil cylinder (15), oil cylinder cover (16), adjusting piston (19), and adjusting screw rod (17) which is connected with the adjusting piston. The oil cylinder (15) has an oil passage which leads to the sealed internal oil space of the hydraulic elastic element. The adjusting piston has a solid body with two different diameters and has seal ring grooves on the large diameter portion and screw threads on the small diameter portion. In the three ring grooves on the adjusting piston (19) are fitted two metallic rings and one rubber ring respectively, and the latter is fitted in the farthest groove from the oil space of the oil cylinder. The adjusting screw rod (17) has a spherically topped head and a threaded stem which is linked to the adjusting piston (19) with a nut (18). The head of this adjusting screw rod is provided with appropriate radial and axial clearance in its casing space formed by the cave in the nut and the bottom of the adjusting piston so as to permit the adjusting piston to maintain a correct fit clearance without restriction and the adjusting screw rod to rotate with less resistance.

The position of the said adjusting piston in the oil cylinder is adjustable with an adjusting device controlled automatically or manually through the adjusting screw rod. To change the position of the adjusting piston, it will make not only the additional volume of oil in this oil cylinder (15) but also the total volume of working oil in the hydraulic elastic element variable. To keep in step with the device for varying the rigidity, the oil refilling system will increase or decrease the oil amount filled into the hydraulic elastic element as the adjusting piston changes its position in the oil cylinder, thus the amount of working oil in the hydraulic elastic element will also be varied. On principle, while the volumetric modulus of elasticity of oil (that is the ratio of the variation of oil pressure intensity to the unit volumetric variation of oil) remains constant, the greater the total volume of working oil, the greater the volumetric compression under the same pressure intensity, and vice versa. As for the hydraulic elastic element of a construction stated above, whereby the greater the total volume of working oil, the greater the volumetric contraction it will produce under the same force exerted by the driving plunger, so the greater the deformation in length of the elastic element will be produced (that is to say, the greater the variation of distance between the driving and the driven plungers will be produced), and vice versa. Similar to a conventional spring, the ratio of the force exerted on the hydraulic elastic element to its deformation in length is defined as the rigidity of the spring.

For an elastic element of known length and a same force subjected, a greater variation in length will indicate a smaller rigidity of the elastic element, and vice versa. Therefore, to increase the volume of oil in the hydraulic elastic element will diminish its rigidity, and vice versa. By means of the above-mentioned device, the rigidity of the hydraulic elastic element can easily be varied with the engine in operation.

The theoretical thermal process in the cylinder of the diesel engine with oil-cushioned piston may be expressed with its ideal cycle.    Fig. 4 shows an ideal cycle of such a diesel engine.    Similar to the composite cycle for the conventional diesel engines, suppose that one part of total quantity of heat supplied in each cycle is supplied instantaneously at the end of compression process and the other part is supplied under constant pressure at the beginning of the expansion process.

In the Figure, a-c represents an adiabatic compression process, c-y represents an instantaneous heat supply process, y-z represents a constant pressure heat supply process, z-b represents an adiabatic expansion process and b-a represents a constant volume heat output process. In c-y process the pressure of the working medium rises quickly due to instantaneously support of heat, and simultaneously the piston position is lowered due to the compressive deformation of the elastic element, thus causing the enlargement of the cylinder volume. Therefore, the pressure rise of the working medium in this process performs during the enlarging of the cylinder volume. Since the volumetric modulus of elasticity of the oil varies very little in a certain pressure range, so it may be assumed to be invariable in practice, therefore the rigidity of elastic element may also be assumed to be invariable with the volume of working oil being kept constant. Under this condition, line c-y in the figure is straight with a certain slope which depends upon the magnitude of the rigidity of the elastic element. If the rigidity of the elastic element has been decreased, the slope of this straight line will be decreased also, as shown by the dash line c'-y in the figure. The slope of this straight line will decrease gradually until zero when the elastic element rigidity is diminished continually up to a certain value, causing this part of the heat supply process to approach a constant pressure process, as shown by the horizontal dash line in the figure. If the rigidity of the elastic element is increased gradually, the slope of the straight line will increase until it approaches infinity, thus causing this part of the heat supply process to approach a constant volume process, as shown by the vertical dash line in the figure. The common conditions of the cycles represented by the solid and dash lines as shown in Fig. 4 are: the total quantity of heat supplied in a cycle, the maximum pressure in the cycle and the ratio between the heat supplied instantaneously and the heat supplied under constant pressure are respectively all the same. Under such conditions the end points of compression process "C" in each of the cycles apparently lie in different places. For other points such as the end point of instantaneous heat supply process "Y", the end point of constant pressure heat supply process "Z" and the end point of expansion process "b", they lie though in different places yet so close to each other (as supported by calculation) that they cannot be definitely discriminated in plotting the indicator diagram.

Referring to Fig. 4, the ideal cycle of the diesel engine with oil-cushioned piston is a special cycle which lies between a composite cycle (which includes a constant volume heat supply process) and a constant pressure cycle. Under the conditions stated above, the value of the compression ratio, that is permitted to take in this cycle, also lies between the two cycles mentioned. The smaller the rigidity of the elastic element, the nearer this cycle will approach the constant pressure cycle, and the greater the compression ratio will be permitted to take. It is known from the theory about the cycles of the internal combustion engines explained in the thermodynamics that, with the same heat quantity and the same maximum pressure, the constant pressure cycle is permitted to take higher compression ratio and so will obtain a higher thermal efficiency as compared with the composite cycle. Under the same conditions, for this special cycle which lies between the composite cycle and the constant pressure cycles, the thermal efficiency will certainly lie between those of the two cycles mentioned. When the rigidity of the elastic element is decreased, this cycle will approach the constant pressure cycle and the thermal efficiency of which will rise.

Provided that the total heat quantity, the compression ratio and the ratio between the heat supplied instantaneously and the heat supplied under constant pressure respectively remain the same, the ratio of pressure rise in instantaneous heat supply process c-y of this special cycle will become smaller due to the enlargement of the volume of the cylinder as compared with that of the normal composite cycle, consequently the maximum pressure of the cycle will become lower also. The smaller the rigidity of the elastic element is, the smaller the maximum pressure of the cycle will be. But, the decrease of the pressure rise ratio in the heat supply process will result in the loss of thermal efficiency, therefore it is better to increase the compression ratio in order to enhance the thermal efficiency, unless lowering the maximum pressure of the cycle is regarded as a main object.

CLAIMS:

1.      A diesel engine with variable distance at top dead center between the piston and the cylinder head which comprises:

an engine body (12) with power cylinder composed of cylinder block (21), cylinder liner (2) and cylinder head (1), wherein a reciprocally movable piston (22) is disposed, means for transmitting the cylinder power and piston motion composed of connecting rod (10), crank shaft (11) and an elastic element installed between said piston and the small end of said connecting rod, said diesel engine characterized in that:

said elastic element is of hydraulic type, i.e. a liquid spring operating upon the compressibility of oil, which can control automatically the piston position and the cylinder volume in response to the change of gas pressure in the cylinder so as to control automatically the compression ratio and the ratio of pressure rise in combustion process, said hydraulic elastic element has a rigidity varying device, which can vary the rigidity of said hydraulic elastic element with the engine in operation, said hydraulic elastic element is provided with an oil refilling system which can immediately refill said hydraulic elastic element with oil of a certain pressure to compensate the oil leakage therefrom.

2.      A diesel engine according to claim 1, characterized by an hydraulic elastic element comprising:

an hydraulic cylinder (6) fixed in the cylinder block (21), a driving plunger (3) connected to piston (22) and having a smaller diameter than that of said piston, a driven plunger (7) linked up with the small end of connecting rod (10) through guide piston (9) and having the same diameter as that of the driving plunger, and means for limiting the top position of the driving plunger.

3.      A diesel engine according to claim 2, characterized in that a self-adjustable joint is provided between said driving plunger (3) and said piston (22) as well as between said driven plunger (7) and said guide piston (9), thus permitting said plungers to keep their axes in alignment with axis of the hydraulic cylinder (6).

4.    A diesel engine according to claim 3 characterized in that:

said self-adjustable joint between driving plunger (3) and piston (22) comprises a spherically topped plunger end cover (34), a spherical washer (35), a seating bowl (23), a cover plate (24) and at least two screws (20), said self-adjustable joint between driven plunger (7) and guide piston (9) comprises a plunger end cover (28), a spherical washer (29), a seating bowl (30),    a cover plate (31) and at least four screws (32).

5.    A diesel engine according to claim 1 or 2, characterized in that the minimum distance at top dead center between the piston and the cylinder head can be limited and adjusted by the position limiting device arranged between the driving plunger (3) and the driven plunger (7) or between the piston (22) and the guide piston (9).

6.    A diesel engine according to claim 5 characterized in that said position limiting device arranged between the driving plunger (3) and the driven plunger (7) comprises a position limiting bolt (33) and its locking device, the cylindrical head of said position limiting bolt is located inside the bore of the driving plunger (3) and the other end of said bolt is connected to the top of the driven plunger (7), the locking spindle (26) of said locking device is connected to the prolonged end of said bolt at its upper part and fixed on the driven plunger (7) by a locking screw (27) at its lower part, thus preventing any relative rotational movement between said bolt and said plunger.

7.    A diesel engine according to claim 1 characterized by a rigidity varying device of said hydraulic elastic element which is designed as an additional receiver of the compressed oil with variable volume and comprises an oil cylinder (15) with an oil passage leading to the oil space in said hydraulic elastic element, an oil cylinder cover (16) and an adjusting piston (19)

19

0197852

which can be moved by the adjusting screw rod (17).

8.      A  diesel engine according to claim 1 characterized by an oil  refilling  system  of  said  hydraulic  elastic element which comprises an oil pump (40), an overflow valve (43), an accumulator (38)  and  a  check valve (36) for each hydraulic elastic element, the  pressure  of  oil  in said system for refilling the hydraulic elastic  element  can  be  controlled  and set up by said overflow valve according to the operation requirement.

FIG.1

FIG.2

FIG. 3

FIG. 4